# EUROPÄISCHE PATENTSCHRIFT

(11) **EP 0 584 533 B1**
(45) Veröffentlichungstag und Bekanntmachung des Hinweises auf die Patenterteilung: **23.08.1995**
(21) Anmeldenummer: 93111694.1
(22) Anmeldetag: 21.07.1993
(51) Int. Cl.: A01B 45/02

(54) **Vertikutiergerät**
Aerating machine
Appareil pour aérer

(30) Priorität: 24.08.1992 DE 9211348 U
(43) Veröffentlichungstag der Anmeldung: 02.03.1994
(73) Patentinhaber: WOLF-Geräte GmbH Vertriebsgesellschaft KG, D-57518 Betzdorf (DE)
(72) Erfinder: Held, Peter, D-57584 Scheuerfeld (DE)
(74) Vertreter: Koch, Günther, Dipl.-Ing.

(56) Entgegenhaltungen:
- EP-A- 0 133 987
- EP-A- 0 220 754
- EP-A- 0 472 102
- EP-A- 0 472 102
- US-A- 4 897 988

## Beschreibung

Die Erfindung bezieht sich auf ein Vertikutiergerät mit quer zur Fahrtrichtung angeordneter Messerwelle und Heckauswurf für das Vertikutiergut, wie in EP-A-472102 veröffentlicht. Insbesondere bezieht sich die Erfindung auf ein fahrbares, durch einen Führungsgriff steuerbares, elektromotorisch angetriebenes Vertikutiergerät, dessen Heckauswurf mit einer schwenkbaren angelenkten Heckklappe verschließbar ist. An den Heckauswurf ist bei hochgeklappter Heckklappe, ähnlich wie bei einem Rasenmäher ein Fangkorb, ein Fangsack oder eine andere Fangvorrichtung einhängbar, in die das Vertikutiergut gefördert wird. Die den hinteren Teil- des Chassis abschließende Heckklappe schützt die Bedienungsperson bei abgenommenem Fangkorb vor dem ausgeschleuderten Vertikutiergut, insbesondere schützt sie gegen gefährlichen Steinschlag.

Bei großem Vertikutieranfall neigen derartige Vertikutiergeräte bei geschlossener Heckklappe dazu, im Bereich hinter den Vertikutiermessern zu verstopfen.

Der Erfindung liegt die Aufgabe zugrunde, dieses Verstopfen zu verhindern, auch wenn kein Fangkorb eingehängt ist.

Gelöst wird die gestellte Aufgabe durch die Gesamtheit der im Anspruch 1 angegebenen Merkmale.

Das Schwadblech schafft eine vergrößerte Öffnung im Heckbereich des Vertikutierers, ohne Einbuße an der Steinschlagsicherheit. Durch eine große Auswurföffnung und durch die Umlenkwirkung des Schwadbleches wird das Vertikutiergut störungsfrei ausgeworfen und sauber abgelegt. Das Schwadblech kann auf einfache Weise, ähnlich wie der Fangkorb, in dem Gehäuse des Vertikutierers eingehängt werden, wobei Haken am Schwadblech vorgesehen sein können, die entsprechende Ösen oder Stäbe am Chassis des Vertikutiergerätes hintergreifen. Diese Einhängvorrichtung kann ähnlichausgebildet sein wie bei dem Fangkorb.

Bei eingesetztem Schwadblech bildet die hochgeklappte Heckklappe den oberen Deckelabschluß, so daß der Auswurf allseitig und oben abgeschlossen ist und das Vertikutiergut ausschließlich nach unten abgelegt werden kann. Dadurch wird auch verhindert, daß das Vertikutiergut gegen die Bedienungsperson geworfen wird oder nach dem Kühllufteinlaß des Motors gelangt und diesen verstopft.

Das Schwadblech ist vorzugsweise rechteckig ausgebildet und weist eine schräg von oben nach unten verlaufende Rückwand sowie Seitenwände auf, die mit ihrem Vorderrand am Chassis einhängbar sind.

Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 eine Schnittansicht eines elektromotorisch angetriebenen Vertikutiergerätes mit Schnorchelfilter und abnehmbarem Schwadblech, geschnitten nach der Linie I-I gemäß Fig. 2;
Fig. 2 einen Schnitt nach der Linie II-II gemäß Fig. 1;
Fig. 3 eine Teilansicht des in Fig. 1 dargestellten Vertikutiergerätes mit abgenommenem Schwadblech und geschlossener Heckklappe und verstopften Heckauswurf;
Fig. 4 in größerem Maßstab eine durch den Kreis X in Fig. 1 gekennzeichnete Teilansicht des Vertikutiergerätes;
Fig. 5 eine perspektivische Darstellung des abnehmbaren Schwadbleches;
Fig. 6 eine Teilansicht des in Fig. 1 dargestellten Vertikutiergerätes mit an den Heckauswurf bei geöffneter Heckklappe angesetztem Fangkorb;
Fig. 7 eine Rückansicht des in Fig. 1 dargestellten Vertikutiergerätes mit eingesetztem Schwadblech.

Das in der Zeichnung dargestellte Vertikutiergerät weist ein auf Rädern 12 abgestütztes Chassis 10 auf, das eine parallel zu den Radachsen verlaufende Messerwelle 14 lagert, auf der drehfest die Vertikutiermesser 16 aufgesetzt sind. Das Vertikutiergerät wird an einem Führungsbügel 18 geschoben, der am Chassis 10 über eine Achse 20 schwenkbar angelenkt ist. Die Messerwelle 14 wird von einem Elektromotor 22 angetrieben, der in einem auf dem Chassis sitzenden Gehäuse 24 untergebracht ist und der über einen Keilriemen 26 die Messerwelle 14 antreibt. Auf der dem Keilriemen abgewandten Ende der Motorwelle sitzt ein Ventilator 28, der in das Gehäuseinnere eintretende Luft über den Motor streichen läßt, um diesen zu kühlen. Die Kühlluft tritt durch eine Öffnung 30 in das Gehäuse ein, die mit einem Anschlußstutzen versehen ist, auf den eine Anschlußmuffe 32 aufgesteckt ist, an die ein flexibler Faltenschlauch 34 anschließt, in dessen obere Endmuffe 36 ein pilzförmiges Abschlußstück 38 eingesteckt ist, das mittels einer Federklammer am Führungsbügel 18 festgelegt ist. Infolge der Flexibilität des Faltenschlauches 34 kann dieser der Schwenkbewegung des Führungsbügels folgen. In das pilzförmige Abschlußstück 38 ist ein Filterelement eingesetzt. Über dieses Filterelement saugt der Ventilator in Richtung der Pfeile Frischluft von einer Stelle an, die soweit über dem Boden liegt, daß ein Ansaugen von Pflanzenteilen oder Erdbrocken nicht mehr zu befürchten ist. Im übrigen hält das Filterelement Fremdkörper innerhalb des Abschlußstückes 38 zurück. Der Filter ist leicht zu reinigen oder auszuwechseln, so daß eine ständig gleichbleibende Kühlluftmenge den Motor bestreicht und Überhitzungen verhindert. Der Faltenschlauch 34 mit Abschlußstück 38 und Filterelement bildet demgemäß einen 'Schnorchel', der die Frischluftzuführung gewährleistet.

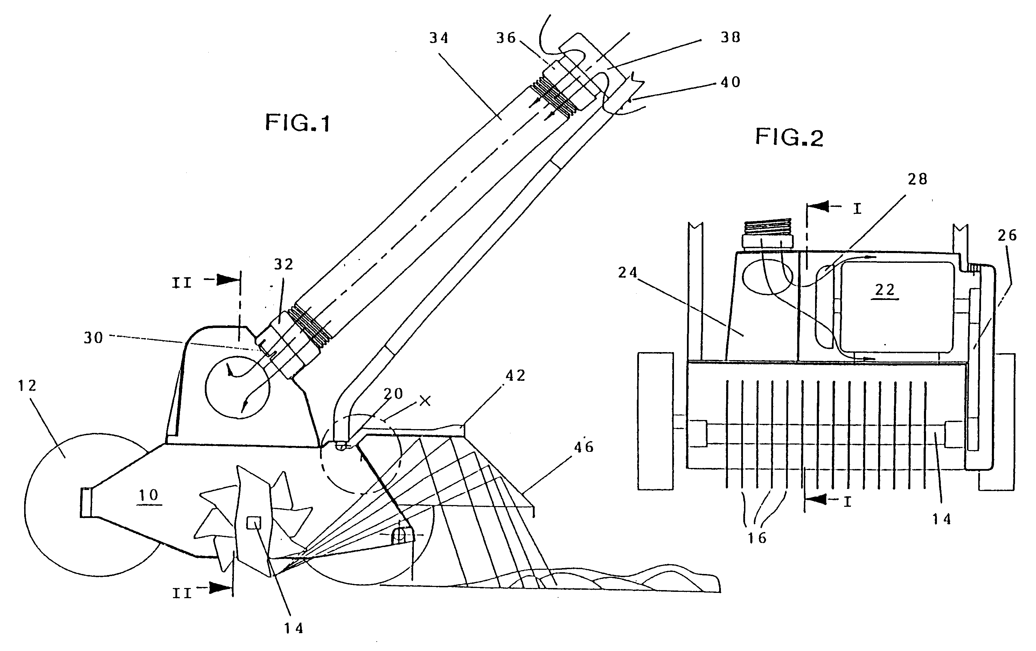

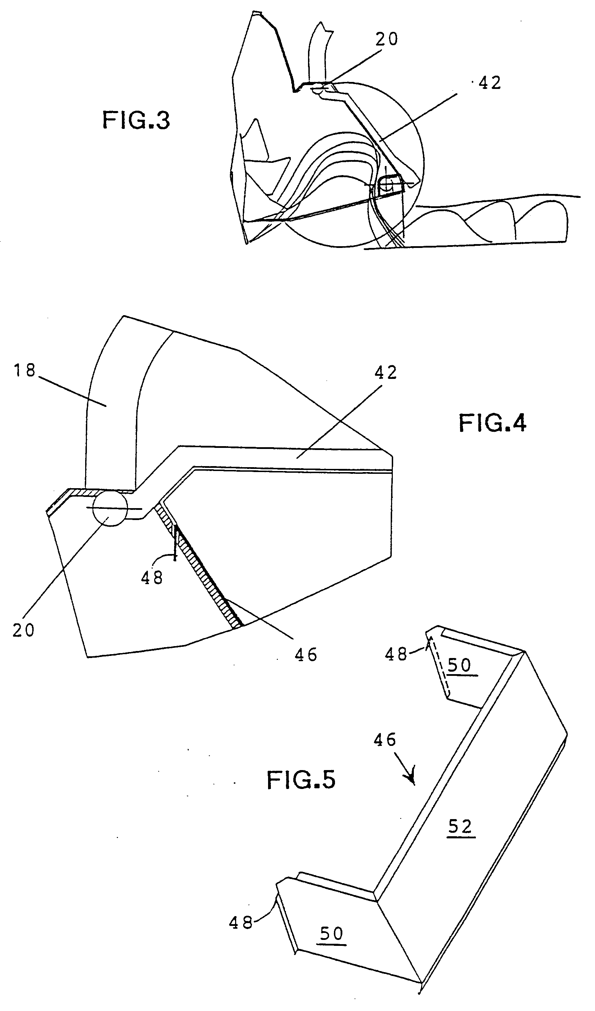

Eine hintere Auswurföffnung des Chassis 10 ist durch eine Heckklappe 42 abschließbar, die um die Anlenkachse 20 des Führungsbügels oder eine parallel hierzu verlaufende Achse schwenkbar ist. In den Figuren 1, 4, 6 und 7 ist die Heckklappe 42 in geöffneter Stellung dargestellt und in Fig. 3 schließt die Heckplatte 42 die hintere Auswurföffnung ab. Infolge hohen Vertikutieranfalls ist, wie ersichtlich, der Heckauswurf verstopft.

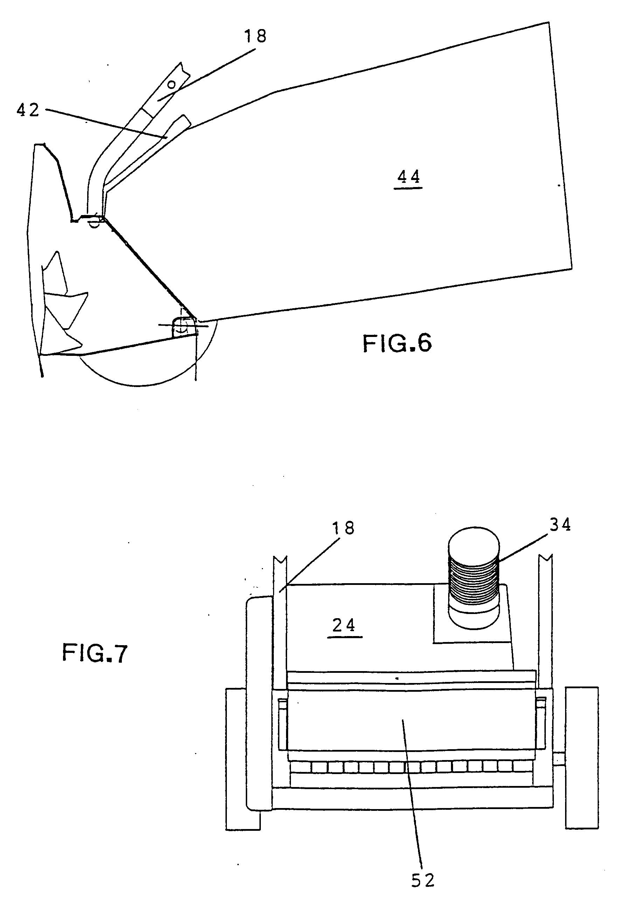

An die hintere Auswurföffnung des Chassis ist bei geöffneter Heckklappe 42 ein Fangkorb 44 einhängbar, in den das Vertikutiergut gefördert wird. Anstelle des Fangkorbes kann bei geöffneter Heckklappe 42 ein Schwadblech 46 eingehängt werden, das in Fig. 5 im Einzelnen und in den Figuren 4 und 7 in Wirkstellung dargestellt ist. Dieses Schwadblech 46 ist mittels zweier Haken 48 am Chassis einhängbar.

Bei geringem Vertikutiergutanfall kann das Vertikutiergerät mit geschlossener Heckklappe 42 gemäß Fig. 3 benutzt werden, wobei das Vertikutiergut gemäß Fig. 3 nach unten abgelegt wird, und durch die Heckklappe 42 wird ein Schutz gegen Steinschlag gewährleistet.

Bei stärkerem Vertikutiergutanfall kann durch das Vertikutiergut der Raum im Chassis hinter den Vertikutiermessern verstopft werden. In diesem Fall empfiehlt sich die Einhängung des Schwadbleches 46, welches den Auswurf durch seine beiden seitlichen Flansche 50 und das hintere Abschlußblech 52 mit einem erweiterten Auswurfraum abschließt. Der obere Abschluß erfolgt durch die Heckklappe 42. Auf diese Weise wird auch bei eingehängtem Schwadblech eine Steinschlagsicherheit gewährleistet. Durch diese vergrößerte Auswurföffnung und durch die Umlenkwirkung des Schwadbleches wird das Vertikutiergut störungsfrei ausgeworfen und sauber abgelegt.

Anstelle des Schwadbleches 46 kann der Fangkorb 44 gemäß Fig. 6, ähnlich wie bei einem Rasenmäher, eingehängt werden.

Durch die leichte Montage des Schwadbleches oder des Fangkorbes kann das Vertikutiergerät vom Benutzer mit nur wenigen Handgriffen umgerüstet werden.

In jeder Stellung, gleichgültig ob bei geschlossener Heckklappe, mit angesetztem Schwadblech oder angesetztem Fangkorb, wird das Vertikutiergut daran gehindert in wesentlichem Umfange nach oben auszutreten. Es wird entweder auf dem Boden abgelegt oder in den Fangkorb gefördert, so daß keine Gefahr besteht, daß es in die Kühllufteinlaßöffnung gelangt.

## Patentansprüche

1. Vertikutiergerät mit einem Chassis (10), einer quer zur Fahrtrichtung angeordneten Messerwelle (14) und einem Heckauswurf für das Vertikutiergut, sowie, zur Abdeckung des Heckauswurfes, einer um eine obere Querachse schwenkbaren Heckklappe (42), wobei an den Heckauswurf bei angehobener Heckklappe ein Fangkorb (44) einhängbar ist,
dadurch gekennzeichnet,
daß ein an den Heckauswurf bei angehobener Heckklappe (42) und abgenommenem Fangkorb (44) einhängbares, aus einem hinteren ebenen Abschlußblech (52) und zwei seitlichen Flanschen (50) bestehendes Schwadblech (46) vorgesehen ist, wobei in eingehängtem Zustand des Schwadbleches (46) die angehobene Heckklappe (42) den oberen Abschlußdeckel des Schwadbleches (46) bildet und das Schwadblech (46) keinen eigenen oberen Abschluß aufweist.

2. Vertikutiergerät nach Anspruch 1,
dadurch gekennzeichnet, daß an den Vorderrändern der Flanschen (50) Einhänghaken (48) angeordnet sind, wobei das rückwärtige Abschlußblech (52) schräg von oben nach hinten unten verläuft.

3. Vertikutiergerät nach den Ansprüchen 1 und 2,
dadurch gekennzeichnet, daß die Heckklappe (42) um die gleiche Achse (20) schwenkbar ist, um die der Führungsgriff (18) schwenkbar angelenkt ist.

## Claims

1. Aerating machine comprising a chassis (10), a cutter shaft (14) mounted transversely to the direction of movement and a rear discharge for exhausting the aerating goods and a rear flap (42) pivotably mounted about an upper transverse axis for covering the rear discharge, wherein a collecting cage (44) can be mounted to the rear discharge if the rear flap is lifted,
characterized in that a swath sheet (46) is provided comprising a plane rear cover sheet (52) with two lateral flanges (50), said swath sheet (46) may be mounted to the rear discharge if the rear flap (42) is lifted and if the collecting cage (44) is taken off, wherein the lifted rear flap (42) forms the upper cover of the swath sheet (46) if mounted to the chassis and the swath sheet (46) does not have its own upper cover.

2. Aerating machine in accordance with claim 1,
characterized in that suspension hooks (48) are provided at the leading edges of said flanges (50) wherein the rear cover sheet (52) is tilted from above towards the rear lower end.

3. Aerating machine in accordance with claims 1 and 2,
characterized in that said rear flap (42) is pivotably mounted about the same axis as the manipulation handle (18).

## Revendications

1. Scarificateur comprenant un châssis (10), un arbre porte-couteaux (14) disposé transversalement par rapport à la direction d'avancement et une ouverture d'éjection arrière pour la matière scarifiée, ainsi que, pour recouvrir l'ouverture d'éjection arrière, un hayon (42) pouvant pivoter autour d'un axe transversal supérieur, sachant qu'un panier collecteur (44) peut être accroché à l'ouverture d'éjection arrière lorsque le hayon est relevé, caractérisé en ce qu'est prévue une planche à andain (46) composée d'une planche arrière plane (52) et de deux brides latérales (50) et pouvant être accrochée à l'ouverture d'éjection arrière lorsque le hayon est relevé et que le panier collecteur est retiré, sachant que le hayon relevé forme le couvercle supérieur de la planche à andain en position accrochée et que la planche à andain ne présente pas d'autre fermeture supérieure.

2. Scarificateur selon la revendication 1, caractérisé en ce que des crochets (48) sont disposés sur les bords avant des brides (50), sachant que la planche de fermeture arrière (52) s'étend en biais de haut en bas vers l'arrière.

3. Scarificateur selon les revendications 1 et 2, caractérise en ce que le hayon (42) peut pivoter autour du même axe (20) que celui autour duquel le guidon (18) est monté de façon pivotante.
